# FASCICULE DE BREVET EUROPEEN

(11) **EP 0 493 287 B1**
(45) Date de publication et mention de la délivrance du brevet: **06.03.1996**
(21) Numéro de dépôt: 91460056.4
(22) Date de dépôt: 13.12.1991
(51) Int. Cl.: H04J 3/16

(54) **Système de transmission de données par répartition dans l'espace temps-fréquence, avec structuration en canaux**
System zur Datenübertragung im Zeit-Frequenz-Multiplex mit Kanalstruktur
System for data-transmission via time-frequency multiplexing with channel structure

(30) Priorité: 19.12.1990 FR 9016383
(43) Date de publication de la demande: 01.07.1992
(73) Titulaire: FRANCE TELECOM, CNET (Centre National d'Etudes des Télécommunications), F-92131 ISSY LES MOULINEAUX (FR); TELEDIFFUSION DE FRANCE S.A., F-92542 Montrouge Cédex (FR)
(72) Inventeur: Savary, Jean-Yves, F-35510 Cesson Sevigne (FR); Blusseau, Floriane, F-35235 Thorigne Fouillard (FR)
(74) Mandataire: Corlau, Vincent

(56) Documents cités:
- EP-A- 0 210 698
- EP-A- 0 369 917
- US-A- 3 988 545
- COMPUTER NETWORKS AND ISDN SYSTEMS; AMSTERDAM, NL vol. 17, no. 3, Septembre 1989; pages 193-199; Y. TAKIYASU ET AL.:'Consideration of a Slot Access Method for Backbone Local Area Networks'.
- GLOBECOM 1987; TOKYO, JP vol. 2, 15 Novembre 1987, pages 1422 - 1426; M. LISTANTI ET AL.: 'INFONET : A BROADBAND INTEGRATED SERVICE LOCAL AREA NETWORK'
- GLOBECOM 1987; TOKYO, JP vol. 2, 15 Novembre 1987, pages 1116 - 1120; S.AIKOH ET AL.: 'A NEW TECHNIQUE FOR VOICE, DATA AND VIDEO TRANSMISSION'
- PROCEEDINGS VLSI AND COMPUTER PERIPHERALS, COMP EURO89; HAMBURG, DE 8-12 MAI 1989; PAGES 4.67-4.70 M. Dècina et al. : "NEW COMMUNICATION TRANSFER MODES FOR THE BROADBAND ISDN"

## Description

### Système de transmission de données par répartition dans l'espace temps-fréquence, avec structuration en canaux.

Le domaine de l'invention est celui de la diffusion de données numériques, notamment selon des procédés assurant un entrelacement en temps et en fréquence des données.

De tels procédés sont notamment développés actuellement pour des applications de diffusion sonore haute qualité, en particulier vers des mobiles circulant en milieu urbain, mais également vers des récepteurs fixes. Ces applications sont souvent désignées par le terme DAB (Digital Audio Broadcasting (Diffusion audionumérique)).

L'invention trouve également une application avantageuse dans le domaine de la télévision numérique (telle que, par exemple, le système du projet DNT : Diffusion Numérique de Terre).

L'invention s'applique en particulier, mais non exclusivement, au système de diffusion numérique dénommé système COFDM (Coding Orthogonal Frequency Division Multiplex (Multiplexage de Fréquences Orthogonales Codées)), tel que décrit dans les brevets français 86 09622 du 2 juillet 1986, et 86 13271 du 23 septembre 1986 au nom des mêmes déposants, ainsi que dans le document de brevet EP-0 369 917 (correspondant au brevet français FR 88 15216).

De façon générale, la diffusion de signaux, qu'il s'agisse de radiodiffusion ou de télévision (analogique ou numérique), repose, selon les techniques connues, sur l'association d'un canal de transmission à un programme spécifique. Cette association est figée et définitive.

En d'autres termes, chaque chaîne de télévision ou chaque station de radio est actuellement systématiquement associée à une fréquence de transmission fixée.

Si l'on analyse la diffusion numérique sous l'angle du modèle de référence ISO, on peut donc considérer que les applications, et par exemple l'application son de haute qualité, correspondent aux couches Présentation (couche 6) et Application (couche 7). A l'autre extrémité du modèle ISO, la partie de transmission DAB correspond aux fonctionnalités des couches Physique (couche 1) et Liaison (couche 2).

On constate donc que les couches intermédiaires ne sont pas représentées. Actuellement, application et réseau sont étroitement liés. En d'autres termes, il n'existe pas de protocole intermédiaire permettant, lorsque cela est possible, de décorreller une application du réseau. Cette absence, si elle peut faciliter dans certains cas les traitements, représente le plus souvent un handicap sérieux.

De plus, l'extension de ce système de diffusion à d'autres domaines d'application, comme par exemple la diffusion de messages personnels, de messages d'aide à la conduite, de messages de localisation, de signaux de télévision, etc...,s'avère difficile.

Des techniques d'allocation de ressources sont connues, dans des domaines techniques différents, tels que la radiotéléphonie (voir par exemple le document EP-0 210 698) ou les réseaux locaux (voir par exemple le document "Consideration of a slot access method for backbone local area networks", Y. TAKIYASU, Computer Networks and ISDN systems, vol. 17, n° 3, 15 septembre 1989, pp. 193-199). Ces techniques concernent des liaisons point-à-point entre deux stations, ou deux terminaux, bien déterminés, prêts à recevoir en permanence.

L'invention a notamment pour objectif de pallier ces inconvénients de l'état de la technique.

Plus précisément, un objectif de l'invention est de fournir un système de diffusion de données numériques dans lequel les données transmises sont organisées de façon à pouvoir distinguer des données appartenant à plusieurs applications distinctes.

Notamment, l'invention a pour objectif de fournir un tel système, permettant la diffusion simultanée de données de tout type, audio, vidéo, télématique, etc...

Un autre objectif de l'invention est de fournir un tel système, présentant une robustesse accrue par rapport aux systèmes connus.

L'invention a également pour objectif de fournir un tel système, dans lequel la ressource de transmission est reconfigurable pour chaque type d'application. L'invention vise notamment à optimiser la gestion de la ressource globale de transmission.

Un objectif de l'invention est encore de fournir un tel système, permettant, à la réception, une démodulation partielle du multiplex de transmission, de façon à simplifier, et donc à réduire le coût, des récepteurs.

Ces objectifs, ainsi que d'autres qui apparaîtront par la suite, sont atteints, selon l'invention, à l'aide d'un système de transmission de données numériques correspondant à au moins une application comprenant chacune au moins un flux de données, les données étant constituées d'éléments numériques répartis dans l'espace temps-fréquence et émis sous la forme de symboles constitués d'un multiplex de fréquences porteuses orthogonales modulées par un jeu desdits éléments numériques et diffusées simultanément, et le train de symboles étant organisé en trames successives, système dans lequel chaque trame est systématiquement découpée en unités élémentaires de transport de données de taille identique, une unité élémentaire de transport étant constituée d'au moins un symbole et/ou d'au moins une portion de symbole consécutif, puis structurée en au moins un canal de transport des données, constitué chacun d'une succession d'au moins une unité élémentaire de transport de données, ledit train de symboles incluant une information descriptive de sa structuration en canaux, cette structuration étant reconfigurable dynamiquement.

Ainsi, selon l'invention, un même canal de transmission peut être affecté au transport de données correspondant à des programmes et des applications distinctes. Des données, du son ou des images peuvent cohabiter sans problème.

L'organisation de la trame étant reconfigurable dynamiquement, elle est réalisée de façon optimale, en fonction des besoins à chaque instant des différentes applications.

En d'autres termes, l'invention permet de décorréler les couches Application et Présentation des couches Physique et Liaison, si l'on se réfère au modèle de référence ISO.

Il convient de noter que cette approche de la diffusion numérique sous l'angle du modèle ISO, qui est utilisé ici essentiellement pour faciliter la compréhension de l'invention, n'est nullement évidente.

En effet, ce modèle est spécifiquement dédié à l'informatique et aux réseaux locaux. Il n'est pas évident de l'appliquer à la diffusion numérique, et rien n'incite à le faire. Au contraire, pour l'homme du métier, il y a toujours un lien direct et unilatéral entre l'information à transmettre et son support physique.

Ainsi, l'invention apporte une solution originale à un problème nouveau, jamais posé, à savoir celui de la décorellation des couches réseau et application dans le domaine de la diffusion numérique.

Cette solution est particulièrement avantageuse. Elle apporte notamment une grande souplesse dans l'utilisation du réseau, une optimisation de la ressource en fonction des besoins, la possibilité de transmettre différents types de signaux (images, sons, données, ...).

Cette nouvelle souplesse conduit à définir dynamiquement l'allocation de la ressource globale et à transmettre en continu une description du canal de transmission.

Préférentiellement, l'information descriptive de la structuration du train de symboles en canaux est acheminée dans un symbole spécifique et/ou dans un canal de signalisation spécifique.

Ladite information descriptive de la structuration du train de symboles en canaux est transmise préférentiellement dans la trame courante et/ou dans au moins une des trames précédentes, de façon cyclique.

Dans un mode de réalisation avantageux, lesdites unités élémentaires sont constituées d'un nombre entier de symboles. Par exemple, une unité élémentaire peut correspondre à un symbole.

Toutefois, il est clair que tout autre granularité, c'est-à-dire décomposition élémentaire de la trame, peut être retenue. Ainsi, par exemple, on peut prévoir des unités élémentaires correspondant à 1,5 symboles, ou à toute autre valeur.

Avantageusement, chaque canal est affecté à la transmission d'un nombre entier de flux appartenant à une même application.

Par application, on entend un ensemble d'information. Elle contient un ou plusieurs flux (audio, vidéo, données,...). Une application est encore un programme ou un service.

Cette organisation en flux permet notamment de simplifier le décodage des signaux. En effet, par exemple, des signaux de son peuvent correspondre à un premier flux, et des signaux d'images à un second flux. A la réception, ces deux types de signaux sont aisément distingués, et dirigés vers les décodeurs idoines.

Dans un mode de réalisation avantageux, ledit système comprend des moyens pour formater les données correspondant à au moins un desdits canaux en mode paquet.

On sait en effet que la transmission par paquets est particulièrement avantageuse, tant en ce qui concerne l'optimisation du débit que la sécurité de transmission.

De façon préférentielle, lesdits paquets sont dans ce cas de taille fixe, choisie parmi au moins une taille de paquet disponible.

Selon les besoins, le nombre de canaux utilisant des paquets peut être variable. Notamment, il est tout à fait possible qu'aucun canal n'utilise le mode paquet. En d'autres termes, la possibilité de mettre en oeuvre le mode paquet n'impose nullement un nombre minimum de canaux à transmettre selon ce mode.

Dans un mode de réalisation particulier de l'invention, une même trame peut donc contenir au moins un canal en mode paquet et au moins un canal en mode transparent.

Avantageusement, les paquets sont synchrones avec chaque symbole successif dudit canal. Ainsi, au décodage, il est aisé de récupérer les paquets et de détecter éventuellement les pertes de paquet, ceux-ci se trouvant toujours au même endroit dans une unité élémentaire.

De façon à conserver cette synchronisation, il est nécessaire de compléter par bourrage lesdits paquets et lesdits canaux.

Avantageusement, ledit symbole de signalisation et/ou ledit canal de signalisation contient au moins une information appartenant au groupe comprenant:
- des marqueurs de début et de fin desdits canaux ;
- le mode de fonctionnement utilisé pour chaque canal ;
- des relations entre des canaux ;
- l'identification des applications.

Dans un mode de réalisation préférentiel de l'invention, chacun des paquets comporte une entête, incluant au moins une information appartenant au groupe comprenant :
- un identificateur d'application ;
- un identificateur de flux ;
- une information de type de média ;
- une information de type de longueur de paquet;
- une information de repérage du premier paquet d'un flux ;
- une information de repérage du dernier paquet d'un flux ;
- un numéro de paquet;
- une information de protection ;
- une information de longueur de données utiles.

D'autres caractéristiques et avantages de l'invention apparaîtront à la lecture de la description suivante d'un mode de réalisation préférentiel de l'invention, donné à titre illustratif et non limitatif, et des dessins annexés dans lesquels :
- la figure 1 est une représentation d'une trame diffusée par un système selon l'invention ;
- la figure 2 est une représentation de la structure d'un paquet selon l'invention ;
- la figure 3 est le schéma synoptique d'un récepteur de données émises par le système de l'invention ;
- la figure 4 est une représentation du contenu d'un symbole de service ;
- la figure 5 présente un champ de données décrivant l'organisation d'un canal.

L'invention concerne donc la diffusion de données entrelacées en temps et en fréquence, notamment selon le système COFDM.

Ce système de diffusion numérique est basé sur l'utilisation conjointe d'un dispositif de codage de canal et d'un procédé de modulation par multiplexage de fréquences orthogonales.

Le procédé de modulation proprement dit de ce système connu permet de s'affranchir des problèmes liés à la sélectivité en fréquence du canal. Il consiste à assurer la répartition d'éléments numériques constitutifs du signal de données dans l'espace fréquence-temps et à émettre simultanément des jeux d'éléments numériques sur N voies de diffusion parallèles au moyen d'un multiplex de fréquences utilisant des porteuses orthogonales. En particulier, ce type de modulation permet d'éviter que deux éléments successifs du train de données soient émis à la même fréquence.

L'invention apporte à ce système des fonctionnalités correspondant aux fonctionnalités des couches Réseau et Transport (3 et 4) du modèle ISO (Interfonctionnement des Systèmes Ouverts). On rappelle que l'approche des systèmes de diffusion sous l'angle de ce modèle ISO est tout à fait nouvelle et originale. Ces fonctionnalités nouvelles donnent au réseau de transmission, la flexibilité nécessaire à son ouverture à de nouvelles applications et permettent une utilisation plus optimisée et souple de la ressource globale de transmission.

Selon l'invention, l'organisation du réseau de transmission repose sur l'existence d'une voie de service, la structuration de la ressource de transmission en canaux, et éventuellement un découpage de certaines données en paquets.

Plus précisément, à l'intérieur de chaque canal, les données peuvent être véhiculées soit en mode paquet, soit en mode transparent.

En mode paquet, dans un canal, les éléments d'une application sont identifiés par une même adresse. Les liens entre l'application et l'adresse sont précisés dans la voie de service. Plusieurs applications peuvent être multiplexées dans un même canal, elles ont alors des adresses différentes.

En revanche, en mode transparent, un canal ne peut bien sûr contenir qu'un seul flux d'une même application.

Une application peut être répartie sur plusieurs canaux. Certains peuvent être utilisés en mode paquet, d'autres en mode transparent. Les liens entre l'application, les canaux et les adresses, sont précisés dans la voie de service.

De façon connue, le réseau est constitué de trames successives, par exemple selon le procédé décrit dans le brevet FR 88 15216, déposé le 18.11.88.

Chaque trame est constituée de symboles consécutifs, un symbole étant un ensemble de fréquences porteuses orthogonales modulées chacune par un ou plusieurs éléments binaires et émises simultanément.

Ces trames sont constituées d'unités élémentaires qui sont constituées d'un ou plusieurs symboles ou portions de symboles consécutifs. Ces unités élémentaires ont un format fixe, identique pour toutes les unités.

Elles peuvent correspondre à un nombre entier de symboles, mais cela n'est nullement obligatoire. On peut tout à fait choisir, en fonction des besoins, une granularité élémentaire quelconque.

Par la suite, pour des raisons de simplification, on considère le cas particulier où une unité élémentaire correspond à un symbole. On utilisera d'ailleurs systématiquement le terme symbole en lieu et place du terme unité élémentaire. Il est clair toutefois que ce cas particulier n'est pas limitatif.

Selon l'invention, toutes les trames sont ensuite subdivisées en canaux. Un canal est donc constitué d'une suite d'un ou plusieurs symboles consécutifs, toujours situés au même emplacement sur toutes les trames. Cette structuration est reconfigurable en fonction des besoins.

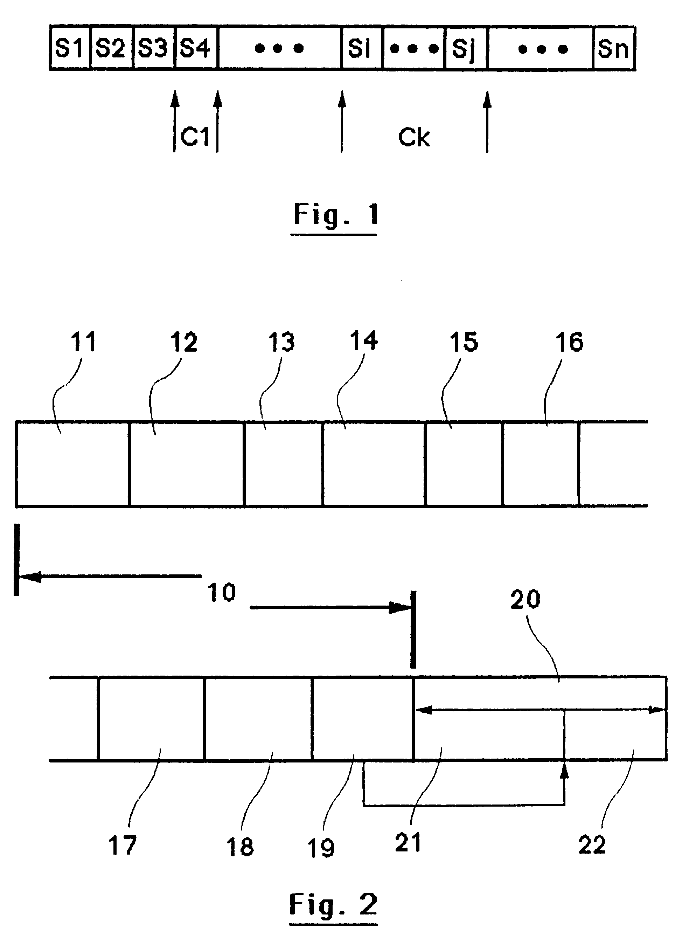

La figure 1 est un exemple d'une telle organisation, montrant des canaux constitués d'un nombre entier de symboles.

Chaque trame débute par trois symboles particuliers S1, S2 et S3 dont le rôle est précisé par la suite. Elle comprend ensuite un certain nombre de symboles utiles de S4 à Sn.

Le symbole S1 est un symbole nul, permettant d'une part d'effectuer une synchronisation analogique, et d'autre part d'effectuer l'analyse spectrale du canal de diffusion. Le symbole S2 est un second symbole de synchronisation constitué par un multiplex non modulé de toutes les fréquences porteuses, à enveloppe sensiblement constante. Cela permet de recaler plus précisément la synchronisation par analyse de la réponse impulsionnelle du canal. Le rôle et le mode de réalisation de ces symboles S1 et S2 sont décrits dans le brevet FR 88 15216 susmentionné. Bien sûr, ces symboles de synchronisation ne sont pas obligatoires vis à vis de l'invention. Ils sont présentés à titre purement illustratif.

Le symbole S3 est en revanche une caractéristique essentielle de l'invention. En effet, ce symbole est une voie de service, qui indique l'organisation et le contenu du réseau.

L'allocation de la ressource s'effectue en attribuant à chaque application un ou plusieurs canaux, et en fixant la taille (en nombre de symboles) de chacun de ces canaux.

Cette allocation de ressource résulte par exemple d'une convention établie entre l'opérateur de réseau et l'opérateur de programme.

Ainsi, à une première application, ne nécessitant qu'un symbole, on affecte le canal C1, correspondant dans toutes les trames au symbole S4. En revanche, pour une autre application ayant un débit plus important, on définit le canal Ck correspondant aux symboles consécutifs Si à Sj.

La voie de service S3 est gérée par l'opérateur du réseau. Elle fournit au décodeur la position des canaux dans les trames, et la description de chaque application.

Cette voie de service est décodée en permanence, et les informations qu'elle contient portent préférentiellement sur une trame distante de n trames, de façon que le décodeur puisse anticiper les éventuelles modifications.

Ainsi, lorsqu'il est prévu un changement de structuration dans la trame Xₜ, la voie de service précise dès la trame Xₜ₋ₙ la nouvelle structuration.

La voie de service peut notamment contenir les informations suivantes :
- les marqueurs de début et fin de canaux (par exemple : canal Ck = [Si, Sj]), décrivant l'organisation statique de la ressource ;
- le mode de fonctionnement utilisé par canal (par exemple : canal Ck = transparent, paquet) ;
- les relations éventuelles entre les contenus de divers canaux appartenant à une même application ;
- l'identification des applications.

L'opérateur du réseau définit donc les canaux de façon statique, et renseigne la voie de service de ces informations. Ces marqueurs peuvent bien sûr être redéfinis par l'opérateur en cas de besoin.

De cette façon, il est aisé d'optimiser l'utilisation de la ressource. Ainsi, par exemple, si l'on considère le cas d'un programme de diffusion radiophonique, on peut prévoir des canaux de tailles variables, selon que le son est transmis en stéréophonie (pour la musique) ou en monophonie (pour la parole). On comprend que ce système offre une grande souplesse. Lorsque l'on fonctionne en monophonie, il est possible de récupérer l'espace disponible pour créer un autre canal, par exemple dédié au transport d'informations télétexte ou d'images.

La relation entre les applications et les canaux définis par l'organisation statique de la ressource s'effectue par l'intermédiaire d'un certain nombre de règles.

Ces règles sont soit précisées directement dans la voie de service, soit dans des canaux spécialisés, précisant les liens entre les différentes informations d'un même programme (selon un modèle similaire à celui des répertoires (en anglosaxon : "directories") des systèmes d'archivage informatiques). Cette seconde solution offre une plus grande souplesse.

De façon à mieux préciser le fonctionnement et l'utilisation de la voie de service, on décrit ci-dessous en détail un exemple particulier, bien sûr non limitatif de l'invention, destiné à la diffusion d'un signal de télévision numérique vers des mobiles.

Dans ce procédé de diffusion, chaque trame a une durée de 24 ms, et est constituée de 150 symboles.

Afin de répartir au mieux la ressource globale de transmission, celle-ci est donc organisée en canaux de composante, le dimensionnement d'un canal de composante étant fonction des besoins de l'application.

Un canal est constitué d'une suite de un ou plusieurs symboles consécutifs. Il conservera d'une trame à l'autre les mêmes symboles tant qu'il n'aura pas été redéfini.

De façon générale, à un instant donné :
- un symbole ne peut être affecté qu'à un canal de composante,
- un canal est fait d'au moins un symbole,
- un canal peut comprendre l'ensemble des symboles non attribués à d'autres canaux.

Le contenu d'un canal de composante est fourni par l'opérateur de programme. Ce contenu est divers. Dans le cas du projet DNT le contenu peut notamment comprendre :
- son DAB (mono, stéréo),
- vidéo MPEG,
- vidéo de qualité Sécam,
- vidéo de qualité D2 MAC,
- vidéo de qualité HD MAC.

D'autres contenus ne sont bien sûr pas à exclure.

Les données de la voie de service sont diffusées dans le symbole S3. Ce symbole doit être décodé en permanence par les récepteurs.

Dans le cas d'un réseau de diffusion vers des mobiles, le symbole S3 a par exemple une capacité de 112 octets par trame.

Afin de garantir un taux d'erreur de diffusion de l'ordre de 10⁻¹ , les données de la voie de service sont protégées par un code correcteur de type Reed Solomon (CSRS). Pour cela le code correcteur utilise 16 octets.

Après code correcteur d'erreur, on dispose donc de 96 octets utiles dans la voie de service.

Les données de la voie de service sont transmises dans des blocs de données à raison d'un bloc par trame.

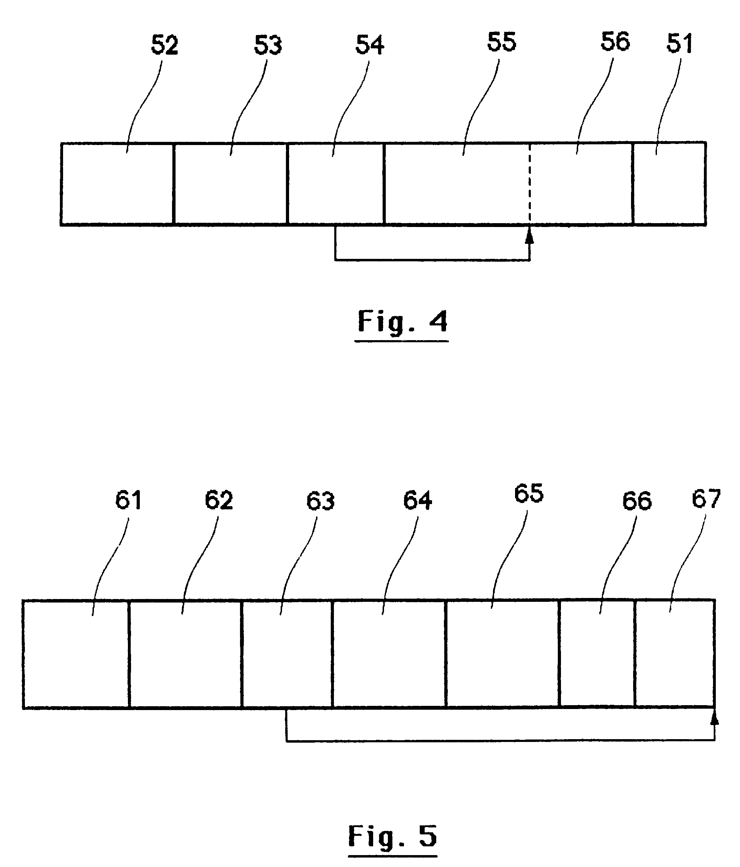

Un tel bloc est illustré en figure 4.

Chaque bloc se termine par 16 octets de correction d'erreur (CSRS) 51.

Chaque bloc est constitué d'un entête minimum de 3 octets :
- Octet 1 : le compteur de trame (52),
- Octet 2 : le type de contenu du bloc (53),
- Octet 3 : la longueur du champ de données (54).

Le compteur de trame 52 permet de regrouper par exemple 256 trames et de définir des supertrames, également appelées phases (paires/impaires). La durée d'une supertrame est égale à T = 256*24ms = 6,144s.

Ce compteur peut prendre des valeurs comprises entre 0 et 255. Il est incrémenté d'une unité à chaque trame.

Cette information peut notamment être utilisée pour définir des endroits de basculement du multiplex.

Le type de contenu 53 définit le type d'information qui est véhiculée dans le symbole de service S3 de la trame en cours de traitement. Il peut notamment s'agir de :
- descripteur du multiplex courant des canaux de composante (qui doit être véhiculé au moins deux fois par seconde, soit environ 1 fois toutes les 16 trames),
- informations de service (répertoire des services, nature des programmes en cours de diffusion...),
- descripteur du futur multiplex des canaux de composante (doit être véhiculé au moins deux fois par seconde, soit environ 1 fois toutes les 16 trames).

La longueur du champ de données 55 indique le nombre d'octets utiles dans un bloc. Les octets suivants (s'il y en a) séparant la fin des octets utiles du début du CSRS 51 sont des octets de bourrage 56.

Ce paramètre peut prendre des valeurs comprises entre 0 et 93.

Lorsque ce paramètre prend la valeur 0, cela signifie qu'il n'y a pas de donnée utile dans le bloc.

Le champ de données 55 peut donc notamment contenir un descripteur du multiplex courant des canaux d'application, tel qu'illustré en figure 5. Ce champ de données indique l'organisation courante du canal de transmission. Il donne un premier niveau d'information sur le contenu des canaux d'application.

Ce descripteur contient notamment :
- un numéro de canal de composante 61, attribué au canal de composante. Il est codé sur un octet et peut prendre toute valeur entre 1 et 254, les valeurs 0 et 255 sont réservées,
- un numéro de programme 62. Cette référence est commune à toutes les composantes d'un même programme. Elle est codée sur un octet et peut prendre toute valeur entre 1 et 254, les valeurs 0 et 255 sont réservées,
- une indication de longueur utile 63. Ce paramètre indique en nombre d'octet la longueur du champ nécessaire à la description du canal d'application et de son contenu,
- une indication sur les caractéristiques des composantes 64. Ce champ donne les caractéristiques du mode de transmission et de la composante transmise: son mono, son stéréo, vidéo MPEG 1, vidéo qualité SECAM, vidéo qualité D2MAC, vidéo qualité HDMAC, par exemple ;
- une indication 65 de modification prochaine des caractéristiques du mode de transmission et/ou de la composante transmise : son mono, son stéréo, changement de type vidéo,...
- deux paramètres d'adresse Addrl 66 et Addr2 67 indiquant les symboles utilisés par le canal d'application. Pour cela Addrl contient le numéro du symbole bas et Addr2 le numéro du symbole haut. Les symboles sont numérotés de 4 à 149.

Le champ de données 55 peut également contenir un descripteur du futur multiplex des canaux de composante.

Ce champ de données indique l'organisation future du canal de transmission. Il donne un premier niveau d'information sur le contenu des canaux d'application.

Ce champ est utilisé en cas de redéfinition de l'allocation de transmission. Il prévient d'une modification des bornes basse et/ou haute d'au moins un canal d'application.

Ces informations seront diffusées à raison de 1 fois toutes les 16 trames et ceci 3 ou 4 fois dans les 48 ou 64 trames qui précèdent le basculement.

Il est à noter que du fait que le système de l'invention est un système de diffusion, les informations descriptives de la structure de la trame doivent être diffusées cycliquement (par exemple deux fois par seconde). Ainsi, tout récepteur, quel que soit l'instant de la mise en route, peut être opérationnel.

La redéfinition du multiplex prendra effet au premier passage de la trame: 63 à 64 ou 127 à 128 ou 191 à 192 ou 255 à 0.

Dans cet exemple, la voie de service correspond à un symbole unique. Il est clair toutefois que, si le nombre de données de service est élevé, la voie de service peut être un canal constitué de plusieurs symboles.

Pour chaque canal, deux modes de fonctionnement sont possibles. Un mode paquet synchrone, qui permet une utilisation optimisée du réseau, et le mode transparent.

Le fonctionnement en mode transparent correspond au fonctionnement actuel du DAB. Les données sont émises directement sur le canal de transmission, sans ajout d'information supplémentaire. Ceci signifie qu'à un canal ne peut être associé qu'un et un seul flux d'une seule application. Si celle-ci est monoflux, un canal ne contiendra donc qu'une et une seule application.

Il en découle une possible sous-utilisation du canal, puisque la place éventuellement perdue n'est pas récupérable. Dans le cas où les besoins d'une application sont moindres, il n'est pas possible d'allouer la place restante à une autre application.

De plus, le mode transparent n'offre pas une solution ouverte. Il apparaît donc qu'il est avantageux d'adjoindre à ce mode transparent un mode paquet, permettant par son mécanisme d'adressage d'optimiser l'utilisation des canaux.

Dans d'autres modes de réalisation, les canaux peuvent bien sûr être tous transmis en mode transparent, ou tous transmis en mode paquet.

En mode paquet, les paquets sont avantageusement synchrones des symboles, de façon à faciliter le repérage des entêtes de paquet.

Le mode synchrone signifie que la taille des paquets utilisée est fixe. Toutefois, cette taille peut être choisie parmi différentes tailles de paquet, afin de satisfaire les besoins des applications à grand et petit volume de données.

De cette façon, il est aisé de repérer un paquet donné dans une trame. On peut fonctionner en temps réel, et détecter facilement tout paquet manquant.

Cela sous-entend bien sûr qu'il y a un nombre entier de paquets par trame.

La structuration des données en paquets impose par ailleurs de diffuser des paquets de bourrage dans le cas où tout le canal n'est pas alloué. Ces paquets peuvent être identifiés de façon particulière pour indiquer que le paquet ne contient pas de données utiles.

Dans le cas où une application n'utilise qu'une partie de la ressource canal, il est clair qu'avec un tel système de découpage en paquets, il devient possible d'allouer la partie restante à une autre application.

Cette organisation du réseau est bien sûr précisée dans la voie de service afin de permettre un accès aisé aux données voulues.

A l'émission, les données de l'application sont groupées en paquets avant d'être transmises sur le canal. Des informations placées dans l'entête des paquets permettent notamment :
- d'associer un paquet à une application,
- d'associer un paquet à un flux de données,
- de détecter d'éventuelles pertes par la numérotation des paquets.

A la réception, les informations d'entête permettent de regrouper les données d'une même application.

La figure 2 est un exemple de structure de paquets.

La taille maximale des paquets est égale au nombre maximum de bits utiles par symbole. Plusieurs tailles de paquet peuvent être définies sur la base de cette taille maximale, par exemple en divisant par 2ⁿ cette taille maximale.

L'entête 10 de paquet contient, sur 5 octets, les données suivantes :
. Des paramètres identifiant un paquet :
   - un identificateur 11 d'application (adresse)
   - un identificateur 12 de flux propre à une application, sous forme de sous-adresse (les flux d'une même application auront tous la même adresse et des sous-adresses distinctes).
. Des paramètres liés au couple (adresse 11, sous-adresse 12):
   - un type 13 de média (audio, vidéo,...) pour faciliter le décodage
   - un type 14 de longueur de paquet donnant la longueur de paquet choisie
   - un booléen 15 indiquant le premier paquet du flux
   - un booléen 16 indiquant le dernier paquet du flux
   - un numéro 17 de paquet, modulo 64 (indice de continuité)
   - une indication 18 de protection comprenant deux informations : un indice de répétition sur 1 bit (valeur 0 : premier envoi ; valeur 1 : répétition) et un indicateur de protection (valeur 0: pas de protection ; valeur 1 : données protégées)
   - la longueur 19 effective des données, en octets.

Les données 20 du paquet comprennent :
- les données 21 effectives de l'application
- des octets de bourrage 22 si nécessaire (pour que le paquet soit plein).

L'identification de chacun des flux constitutifs d'une application et le découpage de ces flux en paquets avec numérotation permettent de réaliser un multiplexage des données d'une application.

Les valeurs numériques indiquées sont bien sûr uniquement indicatives. De même, il est clair que des paramètres peuvent être supprimés, ajoutés ou modifiés.

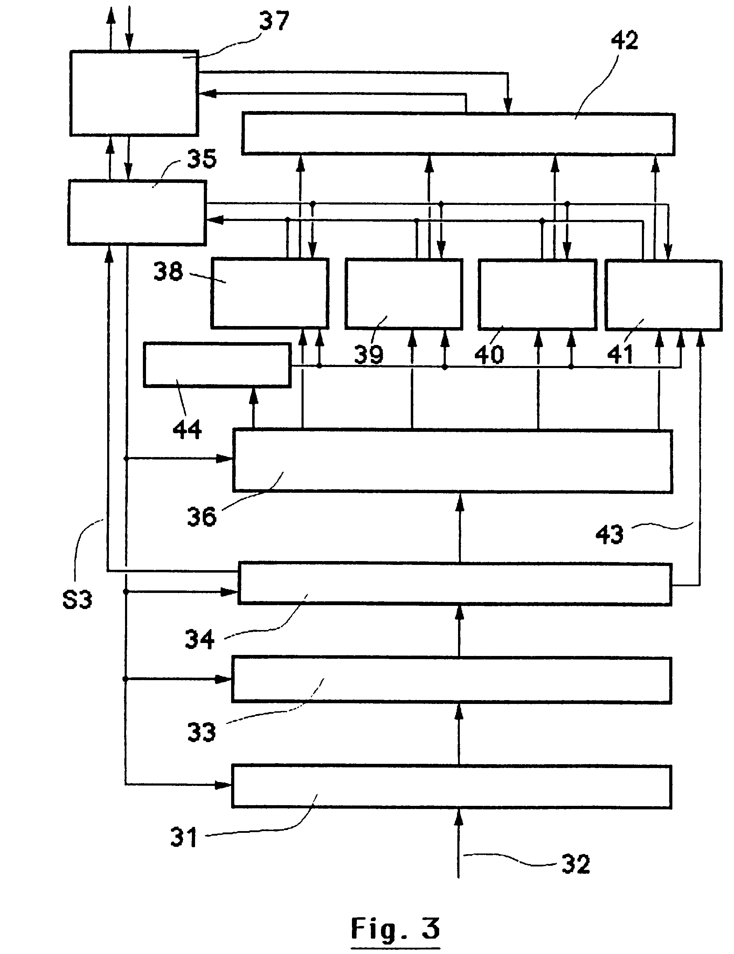

La figure 3 est un schéma synoptique d'un récepteur multimédia compatible avec le système de diffusion de l'invention. Un tel récepteur peut par exemple permettre la restitution de signaux audio, vidéo, télétexte, etc ...

Ce récepteur comprend tout d'abord un module 31 de réception du signal 32 diffusé, et de conversion analogique-numérique, et un module 33 de sélection des symboles.

Du fait de la structuration en canaux, le récepteur sélectionne en effet que les symboles constituant les canaux correspondant au programme souhaité. Les autres symboles sont ignorés, et notamment ne sont pas démodulés. Cette démodulation partielle apporte un gain de temps de traitement (notamment pour le décodage de Viterbi), et donc permet la réalisation de récepteurs moins coûteux.

Les symboles sélectionnés sont ensuite démodulés et décodés, dans le module 34. A ce niveau, la voie de service S3 est récupérée, et dirigée vers un module 35 de supervision de la signalisation, gérant notamment les modules 31, 33, 34, 36 et les différents décodeurs, en fonction des demandes de l'utilisateur, émises par un module 37 d'interface homme-machine.

Lorsqu'on se trouve en mode paquet, le canal démodulé est transmis à un module 36 de démultiplexage des flux et des paquets, qui assure la répartition des différents flux vers plusieurs décodeurs, comprenant par exemple un décodeur 38 télétexte, un décodeur 39 vidéo, un décodeur 40 pour d'autres types de données, et un décodeur 41 audio.

Un module 44 de répartition assure l'aiguillage des données vers les décodeurs concernés.

Les données décodées sont transmises vers un module 42 de restitution, comprenant par exemple au moins un écran de visualisation et au moins un haut-parleur.

On a également prévu, dans ce mode de réalisation, que les données audio peuvent être transmises en mode transparent. Dans ce cas, les données 43 sont dirigées vers le décodeur 41 directement après la démodulation et le décodage de canal dans le module 34.

## Revendications

1. Système de diffusion de données numériques vers une pluralité de récepteurs, du type comprenant :
- des moyens de formation de symboles de données (Si) constitués d'un multiplex de fréquences porteuses orthogonales modulées par un jeu d'éléments numériques et diffusées simultanément, lesdits symboles étant organisés en trames successives comprenant chacune un nombre prédéfini de symboles, et
- des moyens d'émission desdits symboles,
caractérisé en ce qu'il comprend :
- des moyens de réception d'au moins deux flux de données correspondant à au moins deux applications distinctes, chacune desdites applications comprenant au moins un flux de données, au moins certaines desdites applications ayant des besoins en ressource de transmission susceptible de changer à des instants donnés,
- des moyens de définition d'une structure variable de trame en au moins deux canaux (Ck) de transport de données, chaque canal comprenant un nombre entier d'unités élémentaires (Si à Sj) de transport de données consécutives, lesdits moyens de définition étant mis en oeuvre chaque fois que le besoin en ressource de transmission d'au moins une desdites applications varient,
- des moyens de génération d'une description de ladite structure variable en canaux de transport de données, et
- des moyens d'insertion périodique de ladite description de la structure variable dans au moins certaines desdites trames, de façon qu'un récepteur, quel que soit l'instant de sa mise en route, puisse connaître la structure de trame en cours.

2. Système selon la revendication 1 caractérisé en ce que ladite description de la structure variable de la trame est acheminée dans un symbole spécifique (S3) et/ou dans un canal de signalisation spécifique.

3. Système selon la revendication 2 caractérisé en ce que ladite description de la structure variable de la trame est transmise dans la trame courante et/ou dans au moins une des trames précédentes, de façon cyclique.

4. Système selon l'une quelconque des revendications 1 à 3, caractérisé en ce que lesdites unités élémentaires (Sᵢ à Sⱼ) sont constituées d'un nombre entier de symboles.

5. Système selon la revendicaiton 4, caractérisé en ce qu'une unité élémentaire (Sᵢ à Sⱼ) correspond à un symbole.

6. Système selon l'une quelconque des revendications 1 à 5 caractérisé en ce que chaque canal (Ck) est affecté à la transmission d'un nombre entier de flux appartenant à une même application.

7. Système selon l'une quelconque des revendications 1 à 6 caractérisé en ce qu'il comprend des moyens de formater les données correspondant à au moins un desdits canaux en mode paquet.

8. Système selon la revendication 7 caractérisé en ce que lesdits paquets sont de tailles fixes, choisies parmi au moins une taille de paquets disponible.

9. Système selon l'une quelconque des revendications 7 et 8 caractérisé en ce que les paquets sont synchrones avec chaque symbole successif dudit canal.

10. Système selon l'une quelconque des revendications 7 à 9 caractérisé en ce qu'une même trame contient au moins un canal en mode paquet et au moins un canal en mode transparent.

11. Système selon l'une quelconque des revendications 1 à 10 caractérisé en ce que lesdits paquets et/ou lesdits canaux sont complétés par bourrage.

12. Système selon l'une quelconque des revendication 2 à 11 caractérisé en ce que ledit symbole de signalisation et/ou ledit canal de signalisation contient au moins une information appartenant au groupe comprenant :
- des marqueurs de début et de fin desdits canaux ;
- le mode de fonctionnement utilisé pour chaque canal ;
- des relations entre des canaux ;
- l'identification des applications.

13. Système selon l'une quelconque des revendications 7 à 10 caractérisé en ce que chacun des paquets comporte une entête, incluant au moins une information appartenant au groupe comprenant :
- un identificateur (11) d'application ;
- un identificateur (12) de flux ;
- une information (13) de type de média;
- une information (14) de type de longueur de paquet ;
- une information (15) de repérage du premier paquet d'un flux ;
- une information (16) de repérage du dernier paquet d'un flux ;
- un numéro (17) de paquet;
- une information (18) de protection ;
- une information (19) de longueur de données utiles.

14. Récepteur de données numériques, correspondant notamment à des flux de sons, d'images et/ou de données, diffusées par un système de diffusion selon l'une quelconque des revendications 1 à 13, du type comprenant un module de réception (31) des symboles diffusés (32), caractérisé en ce qu'il comprend un module de supervision (35) alimenté par ladite description de la structure variable (S3) et recevant des commandes représentatives de demandes d'un utilisateur, et en ce que ledit module de supervision (35) pilote un module de sélection (33) des symboles correspondant à une application présélectionnée par ledit utilisateur.

15. Récepteur selon la revendication 14, caractérisé en ce qu'il comprend au moins deux décodeurs (38 à 41) correspondant à des types de flux distincts, et un module de répartition (44) assurant l'aiguillage des données reçues vers les différents décodeurs.

16. Signal numérique destiné à être diffusé vers une pluralité de récepteur, du type organisé en trames de signal successives comprenant chacune un nombre prédéterminé de symboles de données (Si), chacun desdits symboles de données (Si) étant constitués d'un multiplex de fréquences porteuses orthogonales modulées par un jeu d'éléments numériques et diffusées simultanément,
caractérisé en ce que lesdites trames sont organisées selon une structure variable en au moins deux canaux (Ck) de transport de données, chaque canal comprenant un nombre entier d'unités élémentaires (Si à Sj) de transport de données consécutives, chacun desdits canaux assurant le transport d'un flux de données distinct choisi parmi au moins deux flux de données correspondant à au moins deux applications distinctes, chacune desdites applications comprenant au moins un flux de données,
et en ce qu'au moins certaines desdites trames comprennent, périodiquement, une description de ladite structure variable en canaux de transport de données, de façon qu'un récepteur, quel que soit l'instant de sa mise en route, puisse connaître la structure de trame en cours.

## Patentansprüche

1. System für die Übertragung digitaler Daten zu einer Mehrzahl von Empfängern mit:
- Mitteln zum Bilden von Symboldaten (Si), bestehend aus einem Multiplex orthogonaler Trägerfrequenzen, die durch einen Satz digitaler Daten moduliert sind und gleichzeitig gesendet werden, wobei die Symbole in aufeinanderfolgenden Teilgruppen organisiert sind, die jeweils eine im voraus definierte Zahl von Symbolen umfassen und
- Mitteln zum Senden dieser Symbole,
gekennzeichnet durch:
- Mittel zum Empfang von mindestens zwei Datenflüsse, die mindestens zwei verschiedenen Anwendungen entsprechen, wobei jede dieser Anwendungen mindestens einen Datenfluß umfaßt und mindestens einige dieser Anwendungen Senderesourcen benötigt, die sich zu gegebenen Augenblicken ändern können,
- Mittel zur Definition einer variablen Teilgruppenstruktur in mindestens zwei Datentransportkanäle (Ck), wobei jeder Kanal eine ganze Zahl von aufeinanderfolgenden Elementareinheiten (Si bis Sj) für den Datentransport umfaßt, wobei die Definitionsmittel immer dann angewandt werden, wenn sich der Bedarf an Senderesourcen von mindestens einer der Anwendungen ändert,
- Mittel zur Erzeugung einer Beschreibung der variablen Struktur von Datentransportkanälen und
- Mittel zum periodischen Einfügen der Beschreibung der variablen Struktur in mindestens einigen der Teilgruppen, damit ein Empfänger die laufende Teilgruppenstruktur erkennen kann, unabhängig vom Zeitpunkt seines Einschaltens.

2. System gemäß Anspruch 1,
dadurch gekennzeichnet, daß die Beschreibung der variablen Teilgruppenstruktur in einem spezifischen Symbol (S3) und/oder über einen spezifischen Signalisierungskanal geleitet wird.

3. System gemäß Anspruch 2,
dadurch gekennzeichnet, daß die Beschreibung der variablen Teilgruppenstruktur in der laufenden Teilgruppe und/oder in mindestens einer der vorausgehenden Teilgruppen zyklisch gesendet wird.

4. System gemäß einem der Ansprüche 1 bis 3,
dadurch gekennzeichnet, daß die Elementareinheiten (Si bis Sj) aus einer ganzen Symbolzahl bestehen.

5. System gemäß Anspruch 4,
dadurch gekennzeichnet, daß eine Elementareinheit (Si bis Sj) einem Symbol entspricht.

6. System gemäß einem der Ansprüche 1 bis 5,
dadurch gekennzeichnet, daß jeder Kanal (Ck) der Übertragung einer ganzen Flußzahl einer selben Anwendung zugeordnet ist.

7. System gemäß einem der Ansprüche 1 bis 6,
dadurch gekennzeichnet, daß es über Mittel verfügt, um die Daten, die mindestens einem der Kanäle entsprechen, im Paketmodus zu formatieren.

8. System gemäß Anspruch 7,
dadurch gekennzeichnet, daß die Pakete festgelegte Größen haben, die unter mindestens einer der verfügbaren Paketgrößen gewählt wurde.

9. System gemäß einem der Ansprüche 7 oder 8,
dadurch gekennzeichnet, daß die Pakete mit jedem nachfolgenden Symbol des Kanals synchron sind.

10. System gemäß einem der Ansprüche 7 bis 9,
dadurch gekennzeichnet, daß eine Teilgruppe mindestens einen Kanal im Paketmodus und mindestens einen Kanal im Transparentmodus umfaßt.

11. System gemäß einem der Ansprüche 1 bis 10,
dadurch gekennzeichnet, daß die Pakete und/oder die Kanäle durch Füllen vervollständigt werden.

12. System gemäß einem der Ansprüche 2 bis 11,
dadurch gekennzeichnet, daß das Signalisierungssymbol und/oder der Signalisierungskanal mindestens eine Information aus der Gruppe enthält, die folgendes umfaßt:
- Marken für den Anfang und das Ende der jeweiligen Kanäle;
- den für jeden Kanal angewandten Funktionsmodus;
- Beziehungen zwischen den Kanälen;
- die Erkennung der Anwendungen.

13. System gemäß einem der Ansprüche 7 bis 10,
dadurch gekennzeichnet, daß jedes Paket ein Kopfteil hat, welches mindestens eine Information aus der Gruppe enthält, die folgendes umfaßt:
- eine Anwendungskennung (11);
- eine Flußkennung (12);
- eine Medientypinformation (13);
- eine Typinformation (14) für die Paketlänge;
- eine Information (15) zur Erkennung des ersten Pakets eines Flusses;
- eine Information (16) zur Erkennung des letzten Pakets eines Flusses;
- eine Paketnummer (17);
- eine Schutzinformation (18);
- eine Information (19) über die Länge der Nutzdaten.

14. Empfänger für Digitaldaten, die insbesondere Ton-, Bild- und/oder Datenflüssen entsprechen, die über ein Übertragunssystem nach einem der Ansprüche 1 bis 13 gesendet werden, von der Art, die ein Empfangsmodul (31) für die gesendeten Symbole (32) umfaßt,
dadurch gekennzeichnet, daß er ein Überwachungsmodul (35) enthält, welches durch die Beschreibung der variablen Struktur (S3) gespeist wird und Befehle empfängt, die repräsentativ für die Anforderungen eines Anwenders sind sowie dadurch, daß das Überwachungsmodul (35) ein Auswahl modul (33) für die Symbole steuert, die einer Anwendung entsprechen, welche vom Anwender vorab gewählt wurde.

15. Empfänger gemäß Anspruch 14,
dadurch gekennzeichnet, daß er mindestens zwei Decoder (38 bis 41) umfaßt, die verschiedenen Flußarten entsprechen sowie ein Verteilungsmodul (44), welches das Zuleiten der empfangenen Daten zu den verschiedenen Decodern sicherstellt.

16. Digitalsignal, das zu einer Mannigfaltigkeit von Empfängern gesendet werden soll, von der Art, die in aufeinanderfolgenden Signalteilgruppen organisiert ist, die jeweils eine im voraus definierte Zahl von Datensymbolen (Si) umfassen, wobei jedes dieser Datensymbole (Si) aus einem Multiplex orthogonaler Trägerfrequenzen gebildet wird, die durch einen Satz digitaler Daten moduliert sind und gleichzeitig gesendet werden,
dadurch gekennzeichnet, daß die Teilgruppen gemäß einer variablen Struktur in mindestens zwei Datenübertragunskanälen (Ck) organisiert sind, wobei jeder Kanal eine ganze Zahl von Elementareinheiten (Si bis Sj) für den Transport von aufeinanderfolgenden Daten umfaßt und jeder dieser Kanäle den Transport eines anderen Datenflusses sicherstellt, der unter mindestens zwei Datenflüssen gewählt wurde, die mindestens zwei verschiedenen Anwendungen entsprechen, wobei jede dieser Anwendungen mindestens einen Datenfluß umfaßt sowie dadurch,
daß mindestens einige der Teilgruppen periodischerweise eine Beschreibung der variablen Datentransportkanalstruktur umfassen, damit ein Empfänger die Struktur der laufenden Teilgruppe erkennen kann, unabhängig vom Zeitpunkt des Einschaltens.

## Claims

1. System for broadcasting digital data to a plurality of receivers, of the type comprising:
- means for forming data symbols (Si) consisting of a multiplex of orthogonal carrier frequencies modulated by a set of digital elements and broadcast simultaneously, the said symbols being organized in successive frames each comprising a predefined number of symbols, and
- means for sending the said symbols,
characterized in that it comprises:
- means for receiving at least two data streams corresponding to at least two distinct applications, each of the said applications comprising at least one data stream, at least some of the said applications having transmission resource requirements liable to change at given moments,
- means for defining a variable frame structure as at least two data transport channels (Ck), each channel comprising an integer number of consecutive elementary units (Si to Sj) for transporting data, the said defining means being employed each time the transmission resource requirement of at least one of the said applications varies,
- means for generating a description of the said variable structure as data transport channels, and
- means for periodically inserting the said description of the variable structure into at least some of the said frames, such that a receiver, irrespective of the moment at which it is switched on, can ascertain the current frame structure.

2. System according to Claim 1, characterized in that the said description of the variable structure of the frame is conveyed in a specific symbol (S3) and/or in a specific signalling channel.

3. System according to Claim 2, characterized in that the said description of the variable structure of the frame is transmitted in the current frame and/or in at least one of the previous frames, cyclically.

4. System according to any one of Claims 1 to 3, characterized in that the said elementary units (Sᵢ to Sⱼ) consist of an integer number of symbols.

5. System according to Claim 4, characterized in that an elementary unit (Sᵢ to Sⱼ) corresponds to a symbol.

6. System according to any one of Claims 1 to 5, characterized in that each channel (Ck) is assigned to the transmission of an integer number of streams belonging to one and the same application.

7. System according to any one of Claims 1 to 6, characterized in that it comprises means for formatting the data corresponding to at least one of the said channels in packet mode.

8. System according to Claim 7, characterized in that the said packets are of fixed sizes, chosen from at least one available packet size.

9. System according to either one of Claims 7 and 8, characterized in that the packets are synchronous with each successive symbol of the said channel.

10. System according to any one of Claims 7 to 9, characterized in that one and the same frame contains at least one channel in packet mode and at least one channel in transparent mode.

11. System according to any one of Claims 1 to 10, characterized in that the said packets and/or the said channels are filled up by padding.

12. System according to any one of Claims 2 to 11, characterized in that the said signalling symbol and/or the said signalling channel contains at least one item of information belonging to the group comprising:
- markers for the start and end of the said channels;
- the operating mode used for each channel;
- relations between channels;
- the identification of the applications.

13. System according to any one of Claims 7 to 10, characterized in that each of the said packets includes a header, containing at least one item of information belonging to the group comprising:
- an application identifier (11);
- a stream identifier (12);
- a type-of-medium item (13);
- a type-of-packet-length item (14);
- an item (15) for tagging the first packet of the stream;
- an item (16) for tagging the last packet of a stream;
- a packet number (17);
- a protection item (18);
- a length-of-useful-data item (19).

14. Receiver of digital data, corresponding especially to streams of sounds, pictures and/or data, broadcast by a broadcasting system according to any one of Claims 1 to 13, of the type comprising a module for reception (31) of the said broadcast symbols (32), characterized in that it comprises a supervisory module (35) supplied with the said description of the variable structure (S3) and receiving commands representating requests from a user, and in that the said supervisory module (35) controls a module (33) for the selection of symbols corresponding to an application preselected by the said user.

15. Receiver according to Claim 14, characterized in that it comprises at least two decoders (38 to 41) corresponding to distinct types of streams, and a distribution module (44) providing for the routing of the received data to the various decoders.

16. Digital signal intended to be broadcast to a plurality of receivers, of the type organized in successive signal frames each comprising a predetermined number of data symbols (Si), each of the said data symbols (Si) consisting of a multiplex of orthogonal carrier frequencies modulated by a set of digital elements and broadcast simultaneously,
characterized in that the said frames are organized according to a variable structure as at least two data transport channels (Ck), each channel comprising an integer number of consecutive elementary units (Si to Sj) for transporting data, the said channels providing for the transport of a distinct data stream chosen from at least two data streams corresponding to at least two distinct applications, each of the said applications comprising at least one data stream,
and in that at least some of the said frames comprise, periodically, a description of the said variable structure as data transport channels, such that a receiver, irrespective of the moment at which it is switched on, can ascertain the current frame structure.
